# EUROPEAN PATENT APPLICATION

(11) **EP 1 274 016 A2**
(43) Date of publication of application: **08.01.2003**
(21) Application number: 02394070.3
(22) Date of filing: 05.06.2002
(51) Int. Cl.: G06F 17/24

(54) **A document build system and method**

(30) Priority: 05.06.2001 IE 20010541; 15.11.2001 IE 20010992
(71) Applicant: MPC Data Systems Limited, Palmerstown, Dublin 20 (IE)
(72) Inventor: Malone, Declan, Dublin 9 (IE); Malone, Gerard Paul, Howth, County Dublin (IE); Malone, John, Drumcondra, Dublin 9 (IE)
(74) Representative: Weldon, Michael James

(57) **Abstract**

A central document build system (10) prints high quality colour documents containing data and images for a diverse range of remote customers (1). A Web server (13) allows a range of upload options (A, BI, BII, C) for the customer system. A document build function (12) populates a selected template and uses this to build a PDF™ document. A messaging function (11) transmits a message with the document attached to the customer for proofing. Final editing may be performed by the customer user during on-line editing.

## Description

### Field of the Invention

The invention relates to production of documents incorporating images, such as brochures for estate agents, travel agents, financial institutions, and IT companies.

### Prior Art Discussion

The field of document printing is well established for many years and very high quality colour documents can be provided. However, the quality of documents produced in small batches is often poor. Further, there is often a considerable time input required for editing and final document production stages. It is therefore often not practical for organisations such as estate agent branches to produce high quality professional-looking documents in low quantities such as brochures for sale of individual properties.

The invention is therefore directed towards providing a system and method for allowing efficient production of high quality documents in small quantities.

### SUMMARY OF THE INVENTION

According to the invention, there is provided a document production system comprising means for building a document in electronic form with data and images and for controlling colour printing of the document, characterised in that, the system further comprises:-
a Web server comprising means for interfacing with a plurality of remote customer systems to retrieve document data and images,
a build function comprising means for populating a selected template with said data and images to provide a built electronic document;
a messaging function comprising means for automatically transmitting the built document as a proof to the customer system which transmitted the data and the images; and
means for controlling printing of the built document in response to receiving a customer approval of the customer approval of the document.

In one embodiment, the Web server comprises means for interfacing with the customer system according to a plurality of different access methods.

In one embodiment, an access method comprises the Web server automatically polling a plurality of remote customer systems at pre-set intervals and retrieving a data file and image addresses, and means for retrieving the images using the image addresses.

In another embodiment, the Web server comprises means for retrieving the images by accessing a URL on a Web server associated with the customer system.

In one embodiment, the Web server comprises means for receiving compressed files containing the data and the images from a plurality of customer systems.

In a further embodiment, the Web server comprises means for receiving uploaded data and images separately in a communication session with a plurality of customer systems.

In one embodiment, the Web server comprises means for allowing access by a customer user to:
retrieve a selected document template; and
populate the template with data and images.

In one embodiment, the Web server comprises means for recognising customer system access parameters, for automatically determining an associated customer object, for retrieving said object, and for using said object to control interfacing operations.

In one embodiment, the build function comprises means for parsing the data file to determine data fields for inclusion in the selected template.

In one embodiment, the build function comprises means for determining a relevant template by parsing the data file.

In a further embodiment, the build function comprises means for retrieving customer-specific data stored in the build system and for using said data for populating the selected template.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagram illustrating architecture of a customer system and a document build system;
Figs. 2(a) and 2(b) are together a flow diagram illustrating operation of the document build system; and
Fig. 3 is a diagram showing a document template.

### Description of the Embodiments

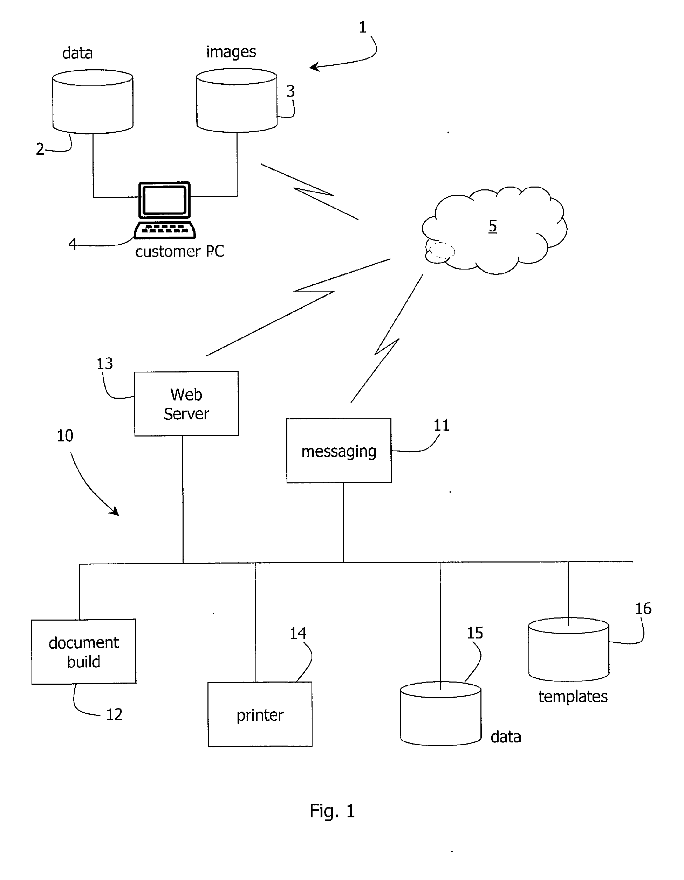

Referring to Fig. 1 a customer system 1 comprises a PC 4 linked via a LAN to a server hosting a database 2 and an image store 3. The hardware and many of the applications are conventional for the day-to-day business of the customer. However, the customer system 1 is also programmed to perform steps of a document build process, described in detail below.

The customer system 1 and many others also, communicate via the Internet 5 with a document build system 10. The document build system 10 comprises:-
a messaging function 11,
a document build function 12,
a Web server 13 with editing functionality,
a database 15 for customer-specific configuration settings and generic data, and
a template store 16 for customer-specific templates.

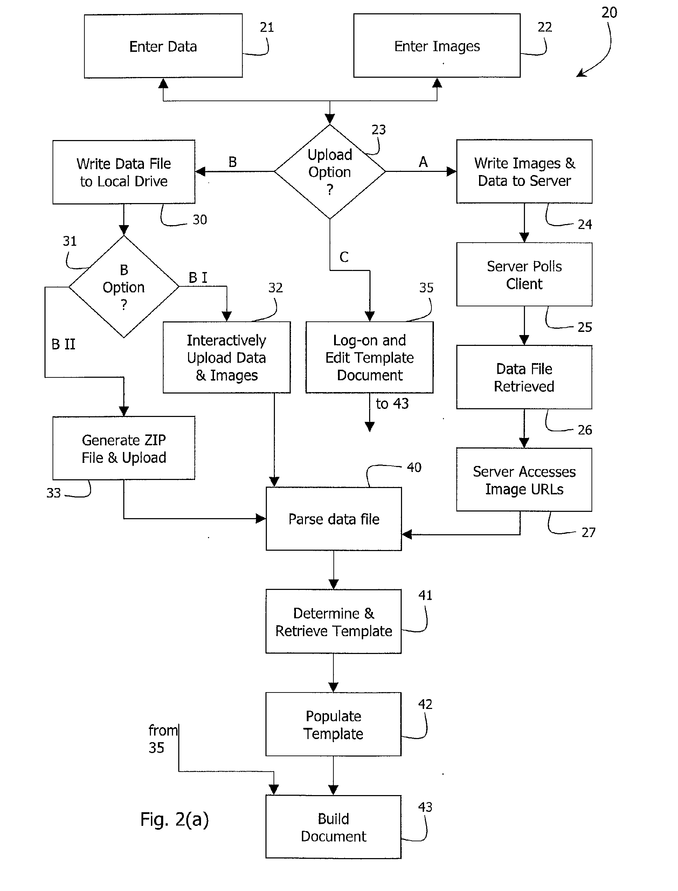

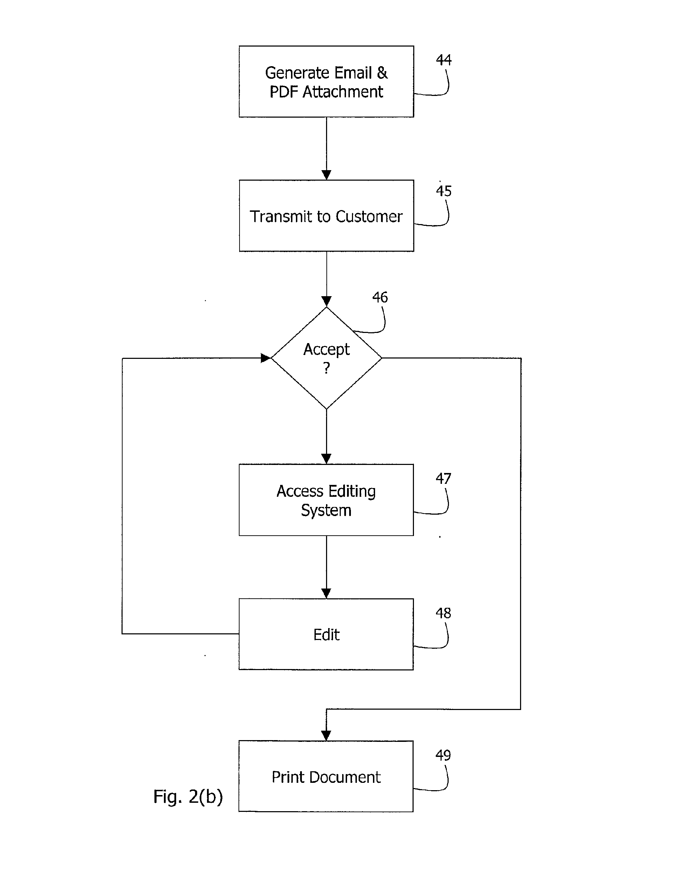

Referring to Figs. 2(a) and 2(b) operation of the customer system 1 and the document build system 10 is illustrated in flow diagram form.

A customer user enters data for the document in step 21 to the database 2 and enters images for it in step 22 to the image store 3. For purposes of clarity we will describe production of an estate agent brochure. In this example the data contains details of the property which is for sale, and the images are digital photographs of the property.

As indicated by the decision step 23, there are three primary options for interfacing with the build system 10 to activate centralised document build operations. These options are as follows.

### Interfacing Option A

In this option, in step 24 the customer PC 4 writes the data as a data file to a customer Web server. Also, the images are written to the Web server. The data file is of a pre-set structure, and it is written to a particular pre-set path location on the Web server. The following is an example.

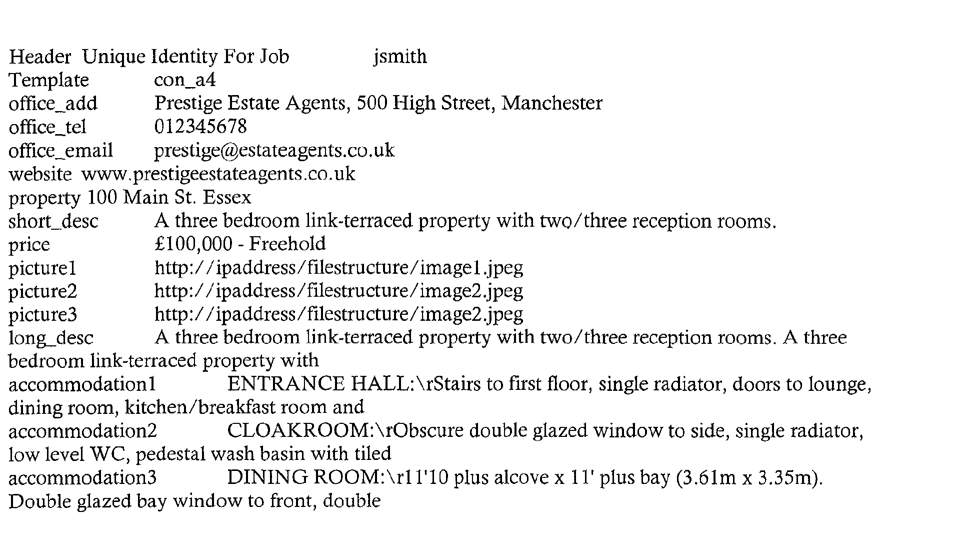

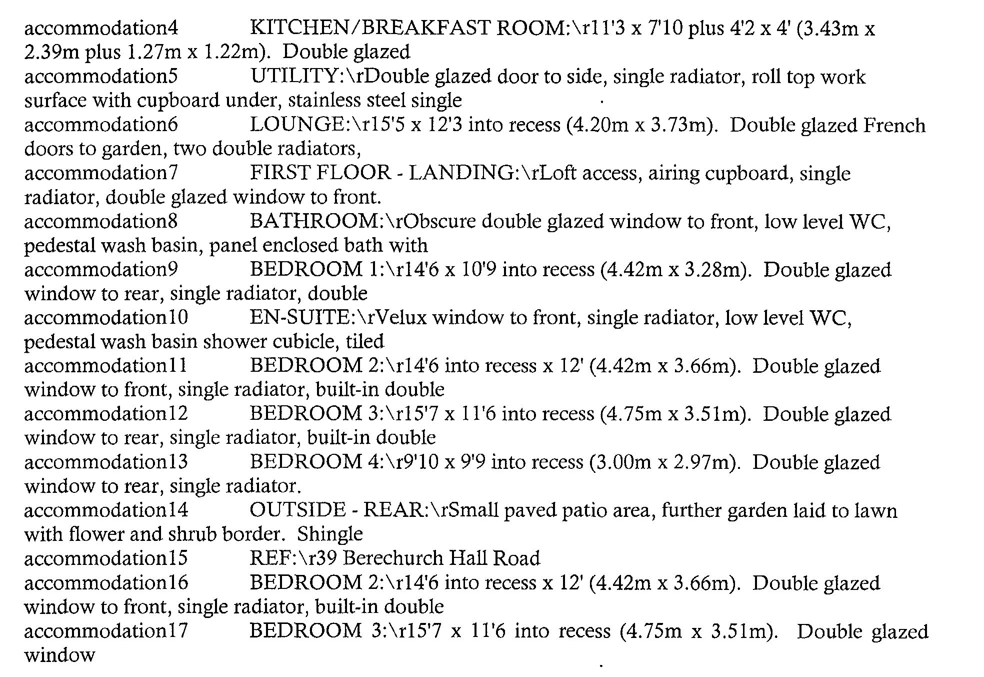

It will be noted that this data file specifies a template. This is one of many templates stored in the build system store 16. Also, the data file includes URL addresses of the images, and the naming convention ("picture1", "picture2" ...) specifies the image order.

In step 25 the build system 10 automatically polls the customer system 1, among many other customer systems also. This is under control of the central Web server 13. The data file is retrieved in step 26, and the images are retrieved in step 27. Thus, upload of the data file and the images to the build system 10 is completely automatic once the customer user has entered the data and images.

### Interfacing Option B

In this option the data file is written to the local drive of the PC 4 in step 30 and this option branches into two sub-options BI and BII in decision step 31.

In the sub-option BI the customer user uses a browser executing on the PC 4 to access the build Web server 13 in step 32. Using a control menu executing on the central Web server 13, the user interactively uploads the data file and the images.

The central Web server 13 stores in its database a set of customer specific objects. It recognises the access control parameters used for the customer log-on and uses them to retrieve a particular associated object. Attributes of the object set the manner in which the build system 10 interfaces with the customer. These attributes define access control, home page display, and templates associated with the customer. A number of parameters may be defined in the customer specific object. For example, a customer may specify if a confirmation email is required before an order can be processed, or if the on-line edit function is to be made available to their staff using the service.

| | | |
|---|---|---|
| Confirmation e-mail | = true | Must await confirmation before processing order |
| | = false | Confirmation not required, begin processing when order placed |
| Edit function enabled | = true | Enable edit function |
| | = false | Edit function not available |

In the sub-option BII, the customer PC 4 in step 33 generates a Zip file containing both the data and the images. While the file is large, because it is compressed the connection time is relatively short.

### Interfacing Option C

This involves a good deal of customer user skill as he or she logs on to the central Web server 13 and interactively selects a template from the store 16 and populates the template with the data and the images. The central Web server 13 performs a wide range of validation operations by comparing inputs to template fields against allowed reference inputs and ranges.

All of the options A, BI and BII provide a data file to the build system 10. The data file is parsed in step 40 by the document build function 12. All coding of the interfacing functions of the systems 1 and 10, including the parsing function, is in Java. The parsing function searches for key values in the data file, such as a header, a userid, and a template.

Parsing provides the name of a required template, which the build function 12 retrieves from the store 16 in step 41. The template has image locations, the names of which are included in the data file together with the associated URLs. In step 42 the build function 12 retrieves the actual images and the customer-specific generic data (such as address of estate agent branch) from the data store 15.

In step 43, the template, the document-specific data for the data file, the customer-specific data from the database 15, and the retrieved images are used to create a document in PDF™ format, by merging the various items of content into the template fields according to template field tags.

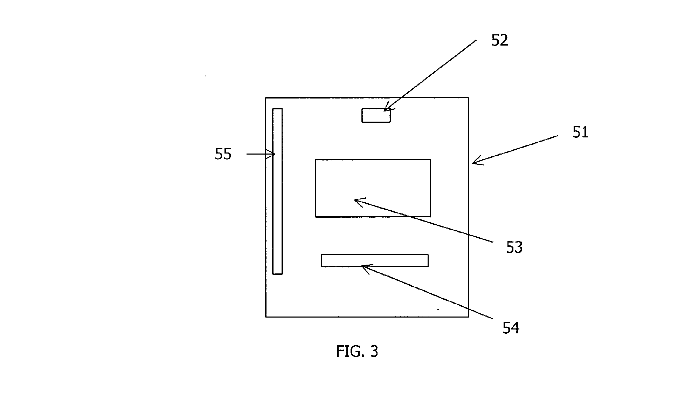

Referring to Fig. 3 a PDF template 51 comprises a customer generic information field 52 "generic customer logo", image field 53 "picture1", text field 54 "price" and text field 55 "office_add". The field names correspond to stored generic customer data or data fields in the customer data file. The output appearance of the text or image of individual fields is defined in the template field description (DAT) file. For example, the text font type and size for each text field is defined as is the scale and alignment of each image. Other attributes may also be defined.

Of course, for the interfacing option C the template is populated during interaction with the customer user.

In step 44, the built document is then attached to an email message by the messaging function 11, as is an automatically-generated letter, and the message and attachments are transmitted to the customer system 1 in step 45. The message incorporates a HTML link to the document as posted to the Web server 13 in the document build system 10. Thus, in a decision step 46 the customer operator may either:-
(a) accept the document proof and reply with a message indicating such, or
(b) access the Web server 13 in step 47 and edit the document in step 48.

If accepted, the build system 10 in step 31 prints the required number of copies, as indicated by either customer settings in the database 15 or in the received data file.

It will be thus be appreciated that the invention provides for highly automated and consistent production of feature-rich documents for customers. The customer personnel have little time input and yet have a very large degree of control over the process.

The invention may be applied to any suitable environment other than estate agents, such as travel agents, financial institutions, IT companies and other commercial organisations that use agents or a branch network for marketing their products /services.

Indeed the range of interfacing options allows excellent flexibility to suit the requirements of a diverse number of geographically remote users. Thus, users of varying levels of technical sophistication in many different locations can achieve a very high quality printed document irrespective of the size of print order. There is also excellent flexibility allowed because of use of the customer objects which set interfacing attributes. There is further flexibility allowed because of the range of templates which can be chosen. Each template is associated with a particular document quality.

The invention is not limited to the embodiments described but may be varied in construction and detail.

## Claims

1. A document production system comprising means for building a document in electronic form with data and images and for controlling colour printing of the document, **characterised in that**, the system further comprises:-
a Web server (13) comprising means for interfacing with a plurality of remote customer systems (1) to retrieve document data and images,
a build function (12) comprising means for populating a selected template with said data and images to provide a built electronic document;
a messaging function (11) comprising means for automatically transmitting the built document as a proof to the customer system (1) which transmitted the data and the images; and
means for controlling printing of the built document in response to receiving a customer approval of the customer approval of the document.

2. A document production system as claimed in claim 1, wherein the Web server (13) comprises means for interfacing with the customer system (1) according to a plurality of different access methods.

3. A document production system as claimed in claim 2, wherein an access method comprises the Web server (13) automatically polling a plurality of remote customer systems (1) at pre-set intervals and retrieving a data file and image addresses, and means for retrieving the images using the image addresses.

4. A document production system as claimed in claim 3, wherein the Web server (13) comprises means for retrieving the images by accessing a URL on a Web server associated with the customer system (1).

5. A document production system as claimed in any of claims 2 to 4, wherein the Web server (13) comprises means for receiving compressed files containing the data and the images from a plurality of customer systems.

6. A document production system as claimed in any of claims 2 to 5, wherein the Web server (13) comprises means for receiving uploaded data and images separately in a communication session with a plurality of customer systems.

7. A document production system as claimed in any of claims 2 to 6, wherein the Web server (13) comprises means for allowing access by a customer user to:
retrieve a selected document template; and
populate the template with data and images.

8. A document production system as claimed in any preceding claim, wherein the Web server (13) comprises means for recognising customer system access parameters, for automatically determining an associated customer object, for retrieving said object, and for using said object to control interfacing operations.

9. A document production system as claimed in any preceding claim, wherein the build function (12) comprises means for parsing the data file to determine data fields for inclusion in the selected template.

10. A document production system as claimed in claim 9, wherein the build function (12) comprises means for determining a relevant template by parsing the data file.

11. A document production system as claimed in any preceding claim, wherein the build function (12) comprises means for retrieving customer-specific data stored in the build system and for using said data for populating the selected template.
